# EUROPEAN PATENT APPLICATION

(11) **EP 2 684 733 A1**
(43) Date of publication of application: **15.01.2014**
(21) Application number: 12005103.2
(22) Date of filing: 11.07.2012
(51) Int. Cl.: B60L 11/18

(54) **Charging station for an electric vehicle and charging device therefor**

(71) Applicant: Illiano, Enzo Michele, 6900 Lugano (CH); Petrini, Flavio, 8953 Dietikon (CH)
(72) Inventor: Illiano, Enzo Michele, 6900 Lugano (CH); Petrini, Flavio, 8953 Dietikon (CH)

(57) **Abstract**

A charging station (50) for an electric vehicle (4) placed on a charging parking space (60) comprises a robotic charging device (1) having a charging interface adapted to functionally engage a complementary charging interface of the electric vehicle (4) and further comprises a control unit adapted to move the robotic charging device (1) automatically into a position so that the charging interface of the robotic charging device (1) functionally engages the complementary charging interface of the electric vehicle (4). The charging station (50) is connected to an electric power source (22, 23). The robotic charging device (1) is a self propelled device having a cable connection (24) to the electric power source (22, 23) to allow a secure charging of any car provided on the parking place (60).

## Description

### TECHNICAL FIELD

The present invention relates to a charging station for an electric vehicle placed on a charging parking space, wherein the charging station comprises a robotic charging device having a charging interface adapted to functionally engage a complementary charging interface of the electric vehicle and further comprises a control unit adapted to move the robotic charging device automatically into a position so that the charging interface of the robotic charging device functionally engages the complementary charging interface of the electric vehicle, wherein the charging station is connected to an electric power source; and a robotic charging device used in connection with such a charging station.

### PRIOR ART

US 7,999,506 discloses a charging station according to the preamble of claim 1. This system is intended for daily use and tries to avoid the manual action of the owner of a car with batteries to have to plug in the battery each and every day that charging is required. The disclosed charging device of the prior art plugs the power automatically into the vehicle with minimal human intervention using an automated docking system. The system is composed of a robotic manipulator with a camera and a processing unit. The system uses the camera and vision processing to identify the vehicle's position, and consequently, the location of the vehicle's charging receptacle. The robotic manipulator then directs the charging cord's plug into the receptacle of the vehicle. Once charging is complete, the robotic manipulator removes the plug from the vehicle.

The autonomy of electric vehicles with reasonably sized batteries is nowadays very limited compared to conventional cars equipped with internal combustion engines. For this reason, an electric vehicle has to be plugged-in very often. The continuous and repeated plugging operation is considered annoying by many drivers. Therefore several patents have disclosed different solutions to avoid this problem. At present, the most popular solution is the wireless charging which can allow a recharge of the vehicle without the need of physically plugging in. For sure this is a comfortable solution but it is related with several drawbacks. First of all, its charging efficiency is very poor compared with conventional conductive charging. In addition, the driver needs to park the car accurately and the charging speed is limited. To conclude the wireless charging equipment is cumbersome and involves the necessity of equipping the vehicle with large on board coils which increase the weight of the vehicle. For these reasons many solutions which allow an automatic plugging have been proposed. Some of them utilize arms as can be seen in US 7,999,506, US 6,157,162 or US 5,306,999, others use grids placed under the vehicle as disclosed in WO 2011/063959. Others suggest rails to drive the plug to the socket as seen from CN 2014-08821Y or DE 2009/013695 or wires coming from the ceiling of the parking lot as suggested by US 3,527,268 or US 2010-102775.

US 2011/0127944 discloses a charging station with a number of parking lots, wherein each parking lot has its own charging device and wherein a control unit distributes the available power to the arriving vehicles.

Therefore, in fact, two concepts of charging vehicles are usually adopted nowadays at fixed charging stations. Either a fix plug and socket connection is chosen for a charging action or charging stations comprise an inductive charging unit having the advantage that no manual plugging action is required. To avoid the disadvantages of the inductive charging itself, many automatic plugging methods have recently been developed. These solutions do mostly use arms, grids, rail systems, docking stations or moving platforms.

### SUMMARY OF THE INVENTION

For sure the devices and methods according to the prior art can mitigate the mentioned problems of the inductive charging but they still have some limitations. First of all, their mobility is quite limited and the car still needs to be parked accurately. In addition the car manufacturer cannot place the socket everywhere under the car. Furthermore, some of them are placed under the floor with a vertical plug construction which involves permeability problems (water can enter into the plug contacts). Finally none of them can serve more than one parking lot.

These charging stations according to the prior art have therefore inter alia the inconvenience that they realize the connection on the upper side. Therefore, unless the charging station is under a roof, the contacts are subjected to the weather, e.g. humidity in the form of rain or snow. It is therefore an object of the present invention to provide a charging station, which can be built in the open, where the mechanical and electrical connection is protected against the weather.

A further inconvenience of the prior art relates to the necessary correct positioning of the vehicle to be charged to enable the arm of the charging device to reach the position of the socket.

Additionally, the prior art solution necessitate one charging device for every charging booth, which is inconvenient for a charging station having several places but not necessarily all vehicles are charged at the same time. This might be due to the fact that in any case the available electrical energy for charging is not sufficient for more than one or a limited number of charging actions at the same time. This is especially true for private users having more than one vehicle to be charged but not the capacity nor the necessity to charge two vehicles at the same time.

Based on the prior art, these and further objects are reached with a charging device according to claim 1.

This invention discloses a simple and efficient method for the automatic plug-in of land-based electric or hybrid vehicles.

The invention is based inter alia on the insight that a charging device moves on wheels on the floor where the vehicle to be charged is parked. The position of the vehicle has not to be necessarily very precise on the parking lot, since it is the charging device that moves on wheels towards the vehicle to be charged and finds automatically the socket-plug position.

This is achieved through a small robotic charging device on at least one, preferably two or more and usually three or even four wheels, being connected to the power socket in the wall through a power cable. It is possible to use a cable reel at the wall outlet or integrated within the charging device to achieve this goal.

When the vehicle to be charged is parked, either the user of the car gives a manual charging instruction to the control unit of the charging robot or this command is issued automatically through a wireless connection. This can be achieved when the vehicle as well as the charging station comprise a wireless interface connected to respective control units. The control unit within the vehicle receives from the battery system the information about the charge level and, if necessary, additional information relating to the priority of charging this vehicle and transmits this information to the control unit of the charging station. Then the charging station's control unit decides if this newly parked vehicle is to be charged. If the answer is yes, a free robotic charging device or the free robotic charging device is moved in a charging position. The control unit can also overrule a previous charging action and remove a charging robotic device from a current charging action and sends it to the newly parked vehicle.

In such a case the robotic charging device starts moving on its wheels and stops itself under or near the vehicle exactly below a socket preferably positioned on the bottom of the electric vehicle.

Then, according to a preferred embodiment, the robotic device stops, an electric plug rises from the robotic charging device to the vehicle (or vice versa) until a mechanical as well as an electric connection with the mentioned socket is obtained.

When a user returns and the electric vehicle is turned on, the charging action is aborted and the robotic charging device quickly leaves the parking lot. Of course, the control unit of the vehicle also ensures that the vehicle cannot move before the robotic charging device has left the parking lot. This can be achieved through a timer or a wireless transmission between the control unit of the vehicle and the charging station, which may evaluate the position of the robotic charging device through length of the reeled cable or through a sensor aboard the robotic charging device either providing the distance to the fixed charging parking station or e.g. detecting the position of the robotic charging device in relationship to the parking lot.

The advantages of the reeled connection of the fixed charging parking station with the robotic charging device which can freely move on its wheels are:
- the robotic charging device can reach any point under the car in a range of several meters
- the car can be parked with no accuracy, especially it does not matter where the front of the car is located. The user can park the car turned forwards or backwards.
- the socket can be positioned anywhere under the car; therefore the system is easily adaptable to all kind of vehicles; the vehicles have only to possess a - quite limited - free chassis clearance.

A single robotic charging device can serve up a number of parking lots, e.g. 4-5 parking lots. Often a family has several cars which in any case cannot be charged at the same time because of the limitation of the electrical grid. Therefore it is an advantage that a single movable charging unit is used to serve all of them.

In an advantageous embodiment the socket is placed horizontally. Therefore water cannot enter into the contacts. Most of the prior art devices propose a vertical placement of the socket which can be considered problematic when water can enter into the contacts. The present invention also solves the mentioned water problem.

When the socket rises, the contacts are completely safe and closed without the need of an additional closure, cover or door.

It is a further advantage of the present advantage that the robotic charging device can be positioned for the plugging operation with only three drives, being wheel right, wheel left and socket elevator.

A robotic charging device is stationed near one or more parking lots. When an electric vehicle parks, the robotic charging device starts moving on its wheels and connects a power cable coming from the wall to a socket placed under the electric vehicle. In this way any manual connection can be avoided by the driver with no additional losses compared to a manual plug. Moreover in this way the driver can park with no accuracy since the wheel based robot has an excellent mobility.

Further embodiments of the invention are laid down in the dependent claims.

The same concept is used according to an embodiment not shown in the drawings to improve the efficiency of conventional wireless charging. The most significant problems of this charging method are due to the large air gap between primary and secondary coils. According to an embodiment of the invention the robotic charging device comprises the primary coil of the transformer on a movable element and raises it in the proper position under the secondary coil provided with the vehicle; i.e. the primary coil is lifted from the body of the robotic charging device up to the bottom of the electric vehicle. In this way the drawbacks of the inductive charging would be significantly mitigated. Due to the minimized air gap between primary and secondary, the efficiency can almost equal the one of conductive solutions and a faster charging speed can be easily obtained with very small coils. Furthermore, due to the mobility of the robot, the driver can park with no accuracy. The advantage of this solution compared to a physical (conductive) connection is the improved safety due to the total absence of exposed electric contacts and plugs.

Another simple connection possibility using the robotic device according to the invention is the utilization of coaxial socket-plug combinations. The utilization of coaxial contacts simplifies the positioning of the robot under the vehicle. In fact in this way the robot only needs to stop under the vehicle socket in the proper xy position on the plane under the vehicle but with no attention to the angle. However, due to the vertical connection and the consequent risk of water entering into the power contacts, this solution is mainly suitable for internal parking lots.

One further advantage of the disc-shaped robotic charging device with reduced height, beside being adapted to roll under the car, it is the possibility to provide a sturdy and robust robot construction, thus avoiding any damage if it is rolled over by the car. It is especially possible to provide a spring based suspension with break-through cushion function. Therefore the wheels have a small vertical spring stroke and fixed abutment spacers allowing to provide a secure suspension of the wheels.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows the operating principle of the charging station according to an embodiment of the invention used in connection with a parked car;
- Fig. 2: shows a view from above on an embodiment of a construction for a charging station according to Fig. 1 which allows a complete mobility of the robotic charging device on wheels;
- Fig. 3: shows a side view on the device according to Fig. 2;
- Fig. 4: shows an embodiment of a horizontal connection way;
- Fig. 5: shows an embodiment of a closed socket on the bottom of the electric vehicle when the charging operation is completed; according to an embodiment of the invention;
- Fig. 6: shows a further embodiment of the robotic charging device according to the invention with guides to facilitate the socket-plug connection; and
- Fig. 7: shows the disposition of a charging station with a robotic charging device according to an embodiment of the invention when used in connection with a plurality of parking lots.

### DESCRIPTION OF PREFERRED EMBODIMENTS

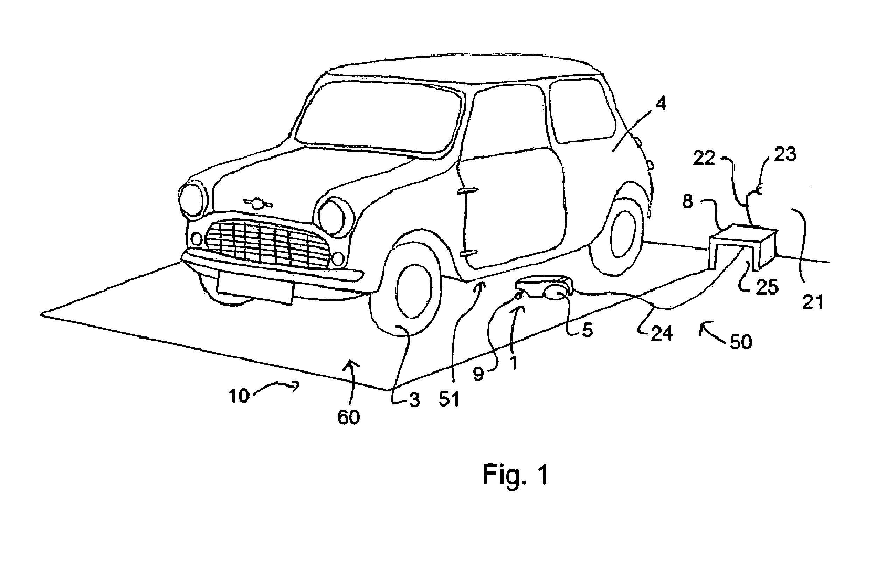

Fig. 1 shows the operating principle of the charging station according to an embodiment of the invention. The aim of this invention is to allow an automatic plugging operation using a robotic charging station 50 comprising the following features in the case that the vehicle 4 having batteries (not shown in the drawings) to be charged is a car.

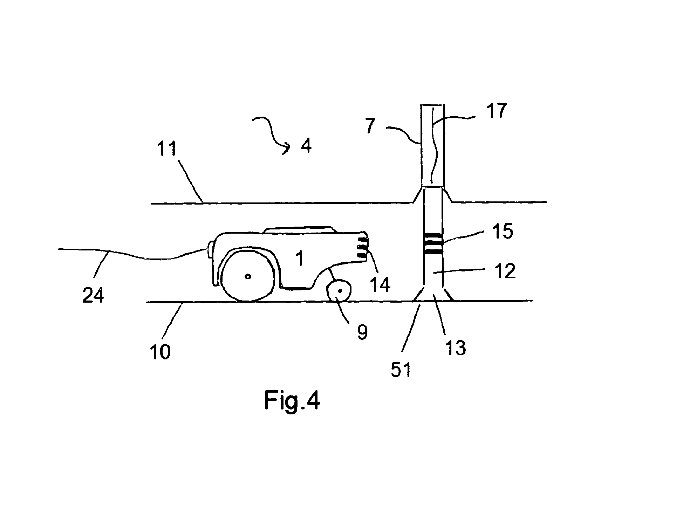

First of all, it is noted that the car manufacturer has the freedom to put the socket 12 in any place under the car 4 with no constriction. In the present embodiment, the socket 12 is under the car 4, symbolized through reference numeral 51, in the middle of the car 4 between the two front seats, when looked onto the vehicle 4 from above and stored in a reception 7 provided therefor (as can be seen in Fig. 4). Secondly, the driver of the vehicle 4 to be charged can park the vehicle with no accuracy at all without compromising the automatic plugging operation. In addition there is no need to provide any fixed equipment like rails or any need to drill the basement or the ceiling of the place of the parking lot. Furthermore, the device 1 according to the invention will be able to serve several parking lots, for example for families having more than one vehicle. To conclude, it will be seen that no plug has to be positioned on the ground 10, thus avoiding the risk of water entering into the electric contacts.

The solution according to the invention comprises a robotic charging device 1 being a similar self-moving device as a mobile robot similar to an automatic vacuum cleaner or an automatic lawn mower with the difference that the charging device is connected with a charging cable 24 to his own storage space 8 near to the parking lot 60 within the charging station 50. The charging cable 24 is preferred to be a flat power cable to minimize its height from the floor.

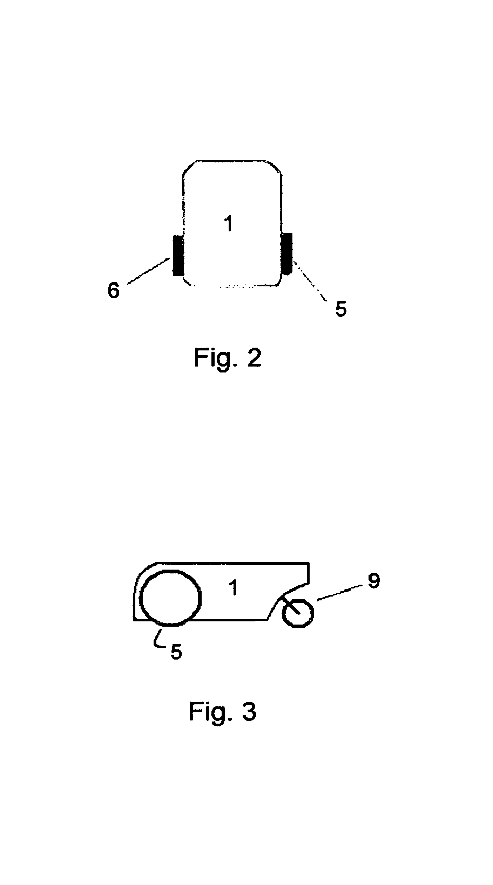

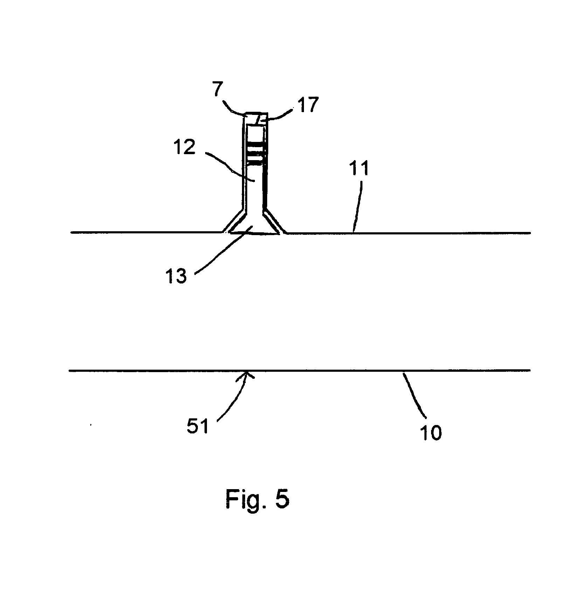

Fig. 2 and 3 show a possible construction according to an embodiment of the invention which allows a complete mobility of the robotic charging device 1 using only three wheels 5, 6 and 9. This comprises a top and a lateral view (on the right side). Fig. 4 shows a closed socket on the bottom of the electric vehicle, when the charging operation is completed, whereas Fig. 5 shows a view on guides provided to facilitate the socket-plug connection.

The mobility of the robotic charging device 1 can be easily guaranteed with two back wheels 5 and 6 and a single front wheel 9. Each back wheel 5 or 6 is driven by a motor while the front wheel 9 is usually not driven and can freely rotate. In this way, with a proper regulation of the two back drives for wheels 5 and 6, it is possible to freely move the robotic charging device on a plane. Another possibility is the utilization of one single motor for the back wheels 5 and 6 and a steering front wheel 9. A complete horizontal mobility can also be obtained by using caterpillar tracks and/or other combinations of steering and not steering wheels instead of wheels 5, 6 and 9 of the embodiment as shown.

The robotic charging device 1 of Fig. 1 is connected to a power socket 23 in the wall through a power cable 22 with a storage box 8 and connected with a connecting cable 24. When the electric vehicle 4 is parked and is turned off, the socket located under the vehicle sends out a radio signal (e.g. Bluetooth) into the environment, as well as an infrared signal pointed to the ground. The e.g. LED can be included within the socket or placed nearby within a predetermined distance.

The robotic charging device gets the radio signal and starts moving towards the source of the signal by measuring the intensity of it. Difference in intensity and fuzzy logic may be applied to achieve this goal. Proximity sensors allow the charging device to avoid obstacles such as the wheels of the vehicle. Once the robotic charging device approximately reaches the position where the socket is located it catches the infrared signal which is then used to position the robotic charging device in the exact position required in order to plug in the socket. In the case of an offset LED then preferably e.g. two lights (which can also emit visible light) are provided with e.g. different flashing schemes, so that the robotic device can distinguish the light sources and orient itself directly under the nearby socket.

Once the appropriate position is reached the socket is plugged in. The plugging in operation is executed by displacing the plug into the socket using electro actuators. When the battery is charged, when the vehicle is turned on or when other significant events occur (e.g. a timer runs out) the radio and the infrared signals get turned off and the robotic charging device unplugs itself and goes back to its starting location. The proper way back to the starting location may be determined in different ways. The same principle described for the plug-in operation can be a simple and effective solution. Another possible solution is the calculation of the path using the wheels speed and direction or an accelerometer and then re-do the same path backwards. Information about the relative position of the robotic charging device, readiness during different operational phases, battery status and vehicle status and other operationally significant data may be exchanged via radio signals (e.g. Bluetooth).

A particularly convenient way to insert the plug 14 into the socket 12 is described in connection with an embodiment, according to Fig. 4, showing a possible horizontal connection way.

The electric vehicle 4 is equipped with a descending socket 12 being stored in a reception 7. Through a bunch of isolated electric wires 17 the socket is connected to the power electronics and control unit of the electric vehicle 4. Depending on the charging architecture (DC, AC one phase, three phases) the socket 12 has a different number of control and power contacts. For example for a three phases charging strategy, five power contacts (phase 1, phase 2, phase 3, ground and neutral point) and two control contacts are usually used. It is advisable to use the same number of power and control contacts of the corresponding conventional charging with manual plug insertion. When the mentioned socket 12 reaches the floor 10, the plug contacts 14 on the robotic charging device 1 exactly match the ones 15 of the descending socket 15. The connection can be established thanks to the horizontal force produced by the robot wheels 5 and 6. The main advantage of this connection is shown in Fig. 5 which represents the socket 12 when it is lifted into its reception 7. In this position the electric vehicle 4 is ready to move. The socket door 13 having a frustoconical shape accurately closes the power contacts in the reception 7, allowing a safe utilization of the electric vehicle 4 on wet streets. Rubber or elastomer joints may be used to seal the round slit between the socket door 13 and the bottom surface 11 of the car 4. In this way a single drive which allows the vertical movement of the socket can guarantee both: a proper connection of the plug and a watertight closure of the power contacts.

In an alternative embodiment, not shown in the drawings, when the robotic charging device 1 stops, an electric plug rises from the robotic charging device 1 to the vehicle 4 until an electric connection with the mentioned socked is obtained. In this context it is to be noted that it is possible, vice versa, that the plug can descend from the car 4 to effect the connection.

To avoid an uncomfortable and long cable 24 on the floor 10, a coil reel placed on the robotic device 1 can be used to store the power cable 24. It is also possible to provide such a reel near the power socket 23 or storage box 8 on the wall or to provide two reels on the robotic device 1 as well as near the storage space 8 of the robotic device 1.

When the electric vehicle 4 is turned on and/or the battery is fully charged, the robotic device 1 quickly leaves the parking lot 60. In this way the robotic device 1 does not risk to be crashed by the vehicle's 4 wheels 3. To protect the robotic charging device 1 especially for outdoors parking lots 7, it is possible to park it in a proper storage box 8.

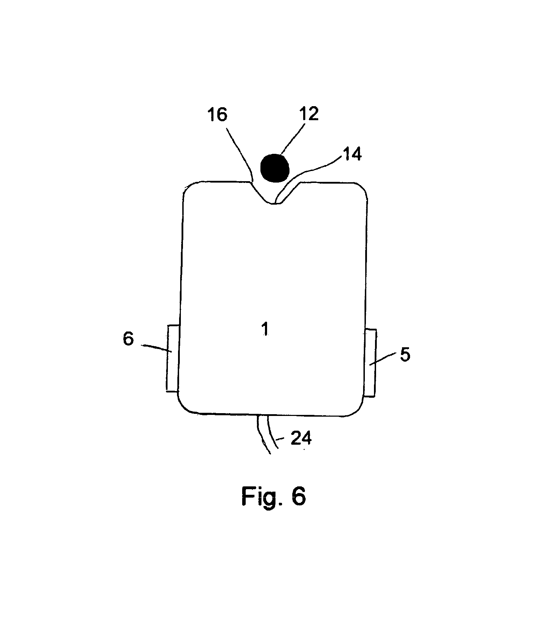

Fig. 6 shows a view onto a further embodiment of the robotic device 1, with means to facilitate the connection of the plug it is possible to place some guides 16 which allow a proper contact even if the robotic charging device 1 does not perfectly hit the centre of the socket 12. The guide surfaces 16 are V-shaped vertical surfaces, allowing to contact the fix socket 12 pushed against the floor and to orient the robotic device in a way that the electrical contacts 14 at the bottom of the V are contacted through the socket contacts 15.

The main advantage of this approach is the improved mobility of the system. In fact a reasonably-sized arm or grid has a very poor mobility compared to an object 1 which can freely move on the floor using its proper wheels 5, 6 or 9. These characteristics allow the driver to park with no constriction and the car manufacturer to place the socket 12 where he prefers.

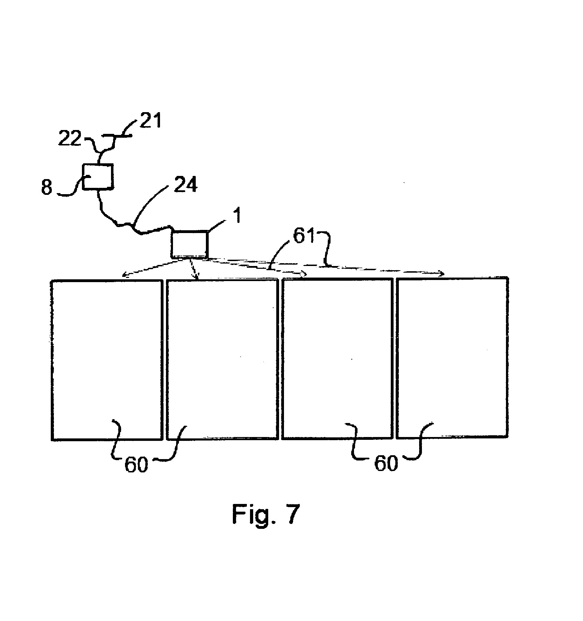

Fig. 7 shows the disposition of a charging station with a robotic charging device 1, according to an embodiment of the invention, when used in connection with a plurality of parking lots 60. This mobility allows the robotic charging device 1 to move and serve several parking spaces 60, here four parking spaces. Arrows 61 indicate that the schematically represented robotic charging device 1 is adapted to move onto every parking space 60, if a vehicle is parked there to charge the vehicle's batteries. Another significant advantage is the simplicity of installation of this equipment. A socket in the wall and an area of few square centimeters to store the robotic charging device 1 is all what is needed by this system. Furthermore, the robotic charging device 1 moving on the floor allows a horizontal connection of the plug. In this way no water can enter into the high voltage electric contacts. To conclude the whole system can be powered with only three drives, i.e. wheel right 5 and wheel left 6 to guarantee a complete horizontal mobility and one additional drive to let the socket descend from the bottom of the vehicle 4 to the floor.

### LIST OF REFERENCE SIGNS

- 1: robotic charging device
- 3: car wheels
- 4: electric vehicle
- 5: right wheel
- 6: left wheel
- 7: socket reception
- 8: robot storage box
- 9: front wheel
- 10: floor
- 11: bottom part of the electric vehicle
- 12: descending socket
- 13: socket door
- 14: plug contact (on the robotic charging device)
- 15: socket contacts (on the electric vehicle)
- 16: guide elements to facilitate the connection
- 17: connection between the socket and the vehicle
- 21: wall
- 22: power connection
- 23: wall socket
- 24: power cable
- 25: opening of storage box
- 50: charging station
- 51: position of socket under the car
- 60: parking space
- 61: arrow

## Claims

1. Charging station (50) for an electric vehicle (4) placed on a charging parking space (60), wherein the charging station (50) comprises a robotic charging device (1) having a charging interface (14) adapted to functionally engage a complementary charging interface (12, 15) of the electric vehicle (4) and further comprises a control unit adapted to move the robotic charging device (1) automatically into a position so that the charging interface (14) of the robotic charging device (1) functionally engages the complementary charging interface (12, 15) of the electric vehicle (4), wherein the charging station (50) is connected to an electric power source (22, 23), **characterized in that** the robotic charging device (1) is a self propelled device having a cable connection (24) to the electric power source (22, 23).

2. Charging station (50) according to claim 1, wherein the self-propelled robotic charging device (1) comprises one, two, three or more wheels (5, 6, 9), wherein one or more wheels can be driven; or wherein the self-propelled robotic charging device (1) is a crawler type vehicle with driven tracks.

3. Charging station (50) according to claim 1 or 2, wherein the self-propelled robotic charging device (1) is essentially a disc-like device of small height compared to its ground surface, wherein the upper surface of the robotic charging device (1) is smaller than the chassis clearance of the vehicles (4) to be charged.

4. Charging station (50) according to any one of claims 1 to 3, further comprising a control unit and at least one sensor connected to the control unit, adapted to sense the absolute and/or relative position of the robotic charging device (1) in relationship to the electric vehicle and its complementary charging interface (12, 15), wherein the control unit is adapted to control the drive elements to move the robotic charging device (1) for said functional engagement of the interfaces (14, 15).

5. Charging station (50) according to any one of claims 1 to 4, wherein the charging interface (14) of the robotic charging device (1) is a plug contact (14) for the complementary charging interface (12, 15) at the vehicle comprising a socket.

6. Charging station (50) according to any one of claims 1 to 4, wherein the charging interface (14) of the robotic charging device (1) comprises a socket contact for the complementary charging interface at the vehicle comprising a plug contact.

7. Charging station (50) according to any one of claims 1 to 4, wherein the charging interface of the robotic charging device (1) comprises a primary plate or coil of an inductive charging interface element to be positioned in face of a complementary inductive charging interface element of the complementary charging interface at the vehicle.

8. Charging station (50) according to anyone of claims 1 to 7, wherein the charging interface (14) of the robotic charging device (1) comprises a rising platform or a movable arm comprising the charging device's interface to perform said functional engagement between said interfaces.

9. Charging station (50) according to anyone of claims 1 to 8, wherein the cable connection (24) comprises a cable and a related coil reel on the robotic charging device (1) and/or wherein the cable connection (24) comprises said cable and a related coil reel near the cable end opposite to the robotic charging device (1).

10. Charging device (1) to be used in connection with a charging station (50) according to any of claims 1 to 9, comprising concave tapering guide elements (16) at the outside of the device (1), preferably at the front side to catch the socket surfaces (15) against the interface plug contacts (14).

11. Complementary charging interface for a system according to any of claims 1 to 10, wherein the complementary charging interface comprises a socket (12) stored in a reception (7) inside the car, wherein a drive is provided to descend the socket (12) from the underside (11) of the car into a reception position.

12. Complementary charging interface according to claim 11, further comprising a closing bottom (13), especially a frustoconical bottom, optionally comprising a joint to be compressed when the interface is retracted into the reception (7).
